# EUROPÄISCHE PATENTSCHRIFT

(11) **EP 1 761 082 B1**
(45) Veröffentlichungstag und Bekanntmachung des Hinweises auf die Patenterteilung: **13.06.2018**
(21) Anmeldenummer: 05090254.3
(22) Anmeldetag: 02.09.2005
(51) Int. Cl.: H04W 48/10, H04W 48/18

(54) **VERFAHREN UND ANORDNUNG ZUM ANBINDEN EINES ZWEITEN KOMMUNIKATIONSNETZES MIT EINEM ZUGANGSKNOTEN AN EIN ERSTES KOMMUNIKATIONSNETZ MIT EINEM KONTAKTKNOTEN**
METHOD AND SYSTEM TO CONNECT A SECOND COMMUNICATION NETWORK HAVING A CONNECTION NODE TO A FIRST COMMUNICATION NETWORK HAVING A CONTACT NODE
PROCÉDÉ ET SYSTÈME POUR CONNECTER UN DEUXIÈME RÉSEAU DE COMMUNICATION AVEC UNE NOEUD D'ACCÈS À UN PREMIÈR RÉSEAU DE COMMUNICATION AVEC UN NOEUD DE CONTACT

(43) Veröffentlichungstag der Anmeldung: 07.03.2007
(73) Patentinhaber: Nokia Solutions and Networks GmbH & Co. KG, 81541 Munich (DE)
(72) Erfinder: Dostal, Pavel, 79828 Morice (CZ); Gotthard, Petr, 63900 Brno (CZ); Kappler, Cornelia, 10587 Berlin (DE); Liebhart, Rainer, 86529 Schrobenhausen (DE); Postmann, Erwin, 7212 Forchtenstein (DE); Schläger, Morten, 14059 Berlin (DE); Zhou, Di, 1220 Wien (AT)
(74) Vertreter: Weidel, Gottfried

(56) Entgegenhaltungen:
- US-A1- 2004 068 571
- "Universal Mobile Telecommunications System (UMTS); 3GPP system to Wireless Local Area Network (WLAN) interworking; System description (3GPP TS 23.234 version 6.5.0 Release 6)" ETSI TECHNICAL SPECIFICATION, Juni 2005 (2005-06), Seiten 1-80, XP014030505

## Beschreibung

Die Arbeiten die zu dieser Erfindung geführt haben, wurden gemäß der Finanzhilfevereinbarung Nr. 507134 im Zuge des Siebten Rahmenprogramms der Europäischen Gemeinschaft (RP7/2007-2013) gefördert.
Die Erfindung betrifft ein Verfahren zum Anbinden eines zweiten Kommunikationsnetzes mit einem Zugangsknoten an ein erstes Kommunikationsnetz mit einem Kontaktknoten.
Mobilfunknetze beispielsweise der dritten Mobilfunkgeneration nach dem 3GPP (3rd Generation Partnership Project)-Standard (www.3gpp.org), wie etwa GPRS (General Packet Radio Service) oder UMTS (Universal Mobile Telecommunications System), wurden ursprünglich im Hinblick darauf entworfen, dass einzelne Endgeräte über eine Luftschnittstelle mittels eines Zugangsnetzes, wie beispielsweise einem so genannten UTRAN (UMTS Radio Access Network), an das so genannte Kernnetz des Mobilfunknetzes angebunden werden. Mittlerweile können jedoch verschiedene weitere Arten von Kommunikationsnetzen an ein 3GPP-Netzwerk angebunden werden und damit die Funktion eines Zugangsnetzes übernehmen. So unterstützen 3GPP-Mobilfunknetze inzwischen verschiedene Zugangsnetze, wie beispielsweise GERAN (GSM Edge Radio Access Network), WMAN (Wireless Metropolitan Area Network) oder WLAN (Wireless Local Area Network). Dabei kann sich der Netzbetreiber oder Dienstanbieter (welche im Folgenden ohne Einschränkung auch nur als Netzbetreiber bezeichnet werden) beispielsweise eines WLAN-Zugangsnetzes von dem Netzbetreiber des 3GPP-Netzwerkes unterscheiden, d.h. der Netzbetreiber des als Zugangsnetz dienenden Kommunikationsnetzes und der Netzbetreiber des 3GPP-Mobilfunknetzes müssen nicht identisch sein. Das Dokument 3GPP TS 23.234 V6.5.0 (2005-06) 3rd Generation Partnership Project; Technical Specification Group Services and System Aspects; 3GPP-System to Wireless Local Area Network (WLAN) Interworking; System Description (Release 6) spezifiziert die Zusammenarbeit zwischen einem WLAN-Zugangsnetz und einem 3GPP-System, d. h. einem Mobilfunknetz nach dem 3GPP-Standard. Dabei wird eine Prozedur definiert, welche es ermöglicht, den Zugang zum WLAN und einem lokal angebundenen IP (Internet Protocol)-Netz über das 3GPP-System zu authentifizieren und zu autorisieren. Darüber hinaus wird eine Prozedur beschrieben, welche es Endgeräten in dem WLAN erlaubt, eine Verbindung zu externen IP-Netzen, wie beispielsweise Mobilfunknetzen der dritten Generation, Firmen-Intranets oder dem Internet über das 3GPP-System aufzubauen.

Entsprechend der in dem Dokument beschriebenen Architektur wird das WLAN Zugangsnetz über eine als Wa-Schnittstelle bezeichnete Schnittstelle an einen so genannten 3GPP AAA (Authentication, Authorisation and Accounting)-Server angebunden. Entsprechend dem Namen des Servers werden über die Wa-Schnittstelle im Wesentlichen Informationen zur Authentifizierung (d. h. Identitätsnachweis und Identitätsüberprüfung), zur Autorisierung (d. h. Nachweis der Berechtigung einen bestimmten Dienst oder eine bestimmte Funktion nutzen zu dürfen) und zur Vergebührung in einer gesicherten Form transportiert. Bei dem betreffenden 3GPP-Mobilfunknetz handelt es sich um das so genannte Heimatnetz des Nutzers, d. h. zwischen dem Betreiber dieses Netzes und dem Nutzer besteht üblicherweise eine Vertragsbeziehung und die nutzerspezifischen Daten sind üblicherweise in einem Netzknoten des Heimatnetzes abgelegt.

Darüber hinaus ist eine weitere, als Wn-Schnittstelle bezeichnete Schnittstelle zwischen dem WLAN Zugangsnetz und dem 3GPP-Heimat-Mobilfunknetz eines Nutzers eines Endgerätes im WLAN vorgesehen. Über die Wn-Schnittstelle wird ein Endgerät in dem WLAN Zugangsnetz mit einem so genannten WLAN Access Gateway (WAG) des 3GPP-Mobilfunknetzes verbunden. Hierdurch wird erreicht, dass jeglicher von dem WLAN Endgerät ausgehender Datenverkehr über eine gesicherte Verbindung in Form eines so genannten Tunnels zu dem WLAN Access Gateway und weiter zu einem Packet Data Gateway (PDG) übermittelt wird. Der Packet Data Gateway stellt den eigentlichen Tunnelendpunkt dar. Das Dokument US 2004/0068571 A1, offenbart die Anbindung eines Breitband Netzwerkes an ein UMTS Netzwerk durch den Austausch von Informationen zwischen beiden Netzwerken, wobei das UMTS Netzwerk dem Breitband Netzwerk entsprechende Informationen zur Verfügung stellt. Der vorliegenden Erfindung liegt die Aufgabe zugrunde, ein flexibles und einfaches Verfahren zum Anbinden eines zweiten Kommunikationsnetzes an ein erstes Kommunikationsnetz anzugeben.
Diese Aufgabe wird erfindungsgemäß gelöst durch ein Verfahren gemäss Anspruch 1 zum Anbinden eines zweiten Kommunikationsnetzes mit einem Zugangsknoten an ein erstes Kommunikationsnetz mit einem Kontaktknoten mit zumindest den folgenden Schritten: Auslesen oder Empfangen einer für das zweite Kommunikationsnetz spezifischen, in einem Speichermedium eines Speicherknotens des zweiten Kommunikationsnetzes gespeicherten Identität durch den Zugangsknoten, Senden einer die für das zweite Kommunikationsnetz spezifische Identität enthaltenden Anbindungsnachricht von dem Zugangsknoten an den Kontaktknoten, der durch eine in dem Speichermedium abgelegte Adresse festgelegt ist, und Bereitstellen eines Paketdatendienstes zu dem Zugangsknoten durch den Kontaktknoten unter Bewirken des Anbindens des zweiten Kommunikationsnetzes an das erste Kommunikationsnetz. Dabei bedeutet "Bereitstellen eines Paketdatendienstes", dass ein Paketdatendienst zwischen dem Zugangsknoten und einem Netzknoten des ersten Kommunikationsnetzes zur Verfügung gestellt wird, d. h. dass die Voraussetzungen für eine Übertragung von Paketdaten geschaffen werden. Diese Paketdatenübertragungsfähigkeit wird verbindungslos hergestellt, d. h. es wird keine statische Verbindung im Sinne einer leitungsvermittelten Übertragung von Daten oder Sprache hergestellt.

Das erfindungsgemäße Verfahren ist bevorzugt, da es universell für das Anbinden eines Kommunikationsnetzes beliebiger Art an ein anderes Kommunikationsnetz beliebiger gleicher oder anderer Art verwendet werden kann. Dabei ermöglicht das Speichern der für das zweite Kommunikationsnetz spezifischen Identität in dem Speichermedium des Speicherknotens des zweiten Kommunikationsnetzes eine flexible Konfiguration des für das Anbinden des zweiten Kommunikationsnetzes zu kontaktierenden Kontaktknotens des ersten Kommunikationsnetzes. Vorzugsweise wird dabei das Speichermedium von dem Netzbetreiber des ersten Kommunikationsnetzes an den Netzbetreiber des zweiten Kommunikationsnetzes ausgegeben. Neben der für das zweite Kommunikationsnetz spezifischen Identität ist in dem Speichermedium auch die Adresse des Kontaktknotens des ersten Kommunikationsnetzes abgelegt. Hierdurch wird es vorteilhafterweise ermöglicht, dass der Zugangsknoten des zweiten Kommunikationsnetzes unabhängig von seinem Ort eine Anbindungsnachricht an den durch die Adresse festgelegten Kontaktknoten senden kann. Hierzu wird lediglich das Speichermedium bzw. die auf ihm abgelegte Information benötigt.

Erfindungsgemäß wird ein Paketdatendienst zwischen dem Zugangsknoten des zweiten Kommunikationsnetzes und einem Netzknoten des ersten Kommunikationsnetzes, vorzugsweise dem Kontaktknoten, bereitgestellt. Dies bedeutet, dass der Paketdatendienst zu dem Zugangsknoten nicht unmittelbar mit dem bzw. durch den Kontaktknoten aufgebaut werden muss. Stattdessen kann es sich bei dem Kontaktknoten vorzugsweise auch um einen Netzknoten handeln, welcher lediglich über die Information verfügt, zu welchem Netzknoten die Anbindungsnachricht weitergeleitet werden soll, d. h. welcher Netzknoten letztlich den Paketdatendienst zu dem Zugangsknoten des zweiten Kommunikationsnetzes bereitstellen soll. Somit ist der Kontaktknoten in das Anbinden des zweiten Kommunikationsnetzes an das erste Kommunikationsnetz immer dahingehend involviert, dass er den weiteren Ablauf nach Empfang der Anbindungsnachricht von dem Zugangsknoten des zweiten Kommunikationsnetzes bestimmt. Neben der unmittelbaren Bereitstellung eines Paketdatendienstes zu dem Zugangsknoten kann der Kontaktknoten einen solchen Paketdatendienst mittelbar dadurch bereitstellen, dass er die empfangene Anbindungsnachricht an einen weiteren Netzknoten weiterleitet, der dann den Paketdatendienst bereitstellt.

Das erfindungsgemäße Verfahren kann vorzugsweise auch so ausgestaltet sein, dass das zweite Kommunikationsnetz und das erste Kommunikationsnetz sich wechselseitig authentifizieren und das erste Kommunikationsnetz eine Autorisierung des zweiten Kommunikationsnetzes vornimmt. Diese Ausgestaltungsform des erfindungsgemäßen Verfahrens ist bevorzugt, da eine wechselseitige Authentifizierung des ersten Kommunikationsnetzes und des zweiten Kommunikationsnetzes sicherstellt, dass die von den jeweiligen Kommunikationsnetzen angegebene Identität tatsächlich korrekt ist. Hierdurch werden Probleme bezüglich der Gebührenabrechnung zwischen den involvierten Kommunikationsnetzen und aufgrund der durch die wechselseitige Authentifizierung ermöglichten Verschlüsselung auch bezüglich der Sicherheit der Datenübertragung vermieden. Des Weiteren kann das erste Kommunikationsnetz vorteilhafterweise eine Autorisierung des zweiten Kommunikationsnetzes vornehmen, um festzustellen, ob das zweite Kommunikationsnetz tatsächlich zum Anbinden an das erste Kommunikationsnetz berechtigt ist.

Das erfindungsgemäße Verfahren kann vorteilhafterweise auch so ausgebildet sein, dass in dem Speichermedium für die Authentifizierung des zweiten Kommunikationsnetzes verwendete Authentifizierungsdaten abgelegt sind. Das Ablegen von für die Authentifizierung des zweiten Kommunikationsnetzes verwendeten Authentifizierungsdaten in dem Speichermedium ist bevorzugt, da in dem Speichermedium bereits das Anbinden des zweiten Kommunikationsnetzes an das erste Kommunikationsnetz betreffende Daten abgelegt sind. Durch das Speichern der Authentifizierungsdaten in dem Speichermedium wird eine gemeinsame Ablage von allen das Anbinden des zweiten an das erste Kommunikationsnetz betreffenden Daten ermöglicht. Diese Daten werden vorzugsweise von dem Netzbetreiber oder Dienstanbieter des ersten Kommunikationsnetzes ausgegeben.

Vorzugsweise ist das erfindungsgemäße Verfahren so ausgebildet, dass der Paketdatendienst nach erfolgreicher Authentifizierung als gesicherte Datenverbindung aufgebaut wird. Die Verwendung einer gesicherten Datenverbindung zwischen dem ersten Kommunikationsnetz und dem zweiten Kommunikationsnetz ist vorteilhaft, da ein Abhören der im Rahmen des Paketdatendienstes übertragenen Daten vermieden werden soll. Wiederum ist zu beachten, dass es sich bei der Datenverbindung nicht um eine Verbindung im Sinne der klassischen leitungsvermittelten Telefonie handelt, sondern um das Herstellen der Bereitschaft und Möglichkeit Datenpakete zu senden und/oder zu empfangen.

In einer weiteren bevorzugten Ausführungsform des erfindungsgemäßen Verfahrens wird die gesicherte Datenverbindung in Form eines so genannten VPN (Virtual Privat Network)-Tunnels aufgebaut. Die Verwendung eines VPN-Tunnels ist bevorzugt, da eine derart verschlüsselte Verbindung auch bei Zwischenschaltung weiterer, ungesicherter Kommunikationsnetze einen vertraulichen Datenaustausch ermöglicht. Um eine gesicherte Datenübertragung beispielsweise auch bei Zwischenschaltung des Internets zu ermöglichen, werden die Datenpakete hierbei gekapselt, d. h. in verschlüsselter Form übertragen. Vorzugsweise wird hierbei eine VPN-Technik wie beispielsweise IPSec (IP Security) oder L2TP (Layer 2 Tunneling Protocol) verwendet.

Das erfindungsgemäße Verfahren kann vorzugsweise auch so ablaufen, dass der Paketdatendienst zwischen dem ersten Kommunikationsnetz und dem zweiten Kommunikationsnetz ganz oder teilweise drahtlos erbracht wird. Diese Ausführungsform des erfindungsgemäßen Verfahrens ist bevorzugt, da sie im Vergleich zu einer vollständig drahtgebundenen Verbindung häufig flexibler und einfacher ist.

Das erfindungsgemäße Verfahren kann vorteilhafterweise auch so ablaufen, dass der Paketdatendienst zwischen dem ersten Kommunikationsnetz und dem zweiten Kommunikationsnetz zur Übertragung von Vergebührungsdaten verwendet wird. Vorzugsweise wird somit der Paketdatendienst zwischen dem ersten Kommunikationsnetz und dem zweiten Kommunikationsnetz neben der Übertragung von die Authentifizierung und die Autorisierung betreffenden Daten auch zur Übertragung von Vergebührungsdaten verwendet. Hierdurch wird es beispielsweise dem Zugangsknoten des zweiten Kommunikationsnetzes ermöglicht, vergebührungsrelevante Informationen an das erste Kommunikationsnetz zu senden, in welchem dann eine entsprechende Vergebührung vorgenommen werden kann.

In einer weiteren vorteilhaften Ausgestaltung des erfindungsgemäßen Verfahrens kann das Anbinden des zweiten Kommunikationsnetzes an das erste Kommunikationsnetz über zumindest ein weiteres Kommunikationsnetz erfolgen. Diese Ausführungsform ist bevorzugt, da hiermit die Notwendigkeit einer unmittelbaren Verbindung zwischen dem ersten und dem zweiten Kommunikationsnetz entfällt. Stattdessen kann die Verbindung unter Zwischenschaltung eines weiteren Kommunikationsnetzes, vorzugsweise des Internets, erfolgen.

Vorzugsweise läuft das erfindungsgemäße Verfahren so ab, dass in dem zweiten Kommunikationsnetz Endgeräte betrieben werden. Dabei können die Nutzer der Endgeräte mittels des zweiten Kommunikationsnetzes vorteilhafterweise beispielsweise auf Dienste und/oder Informationen im ersten Kommunikationsnetz zugreifen und/oder zur Authentifizierung, Autorisierung und Vergebührung in dem ersten Kommunikationsnetz verfügbare, für den Nutzer des Endgerätes spezifische Daten verwenden.

Das erfindungsgemäße Verfahren kann vorzugsweise auch so ablaufen, dass die Endgeräte zur Nutzung von Diensten des ersten Kommunikationsnetzes jeweils einen eigenen Paketdatendienst zu dem ersten Kommunikationsnetz aufbauen. Diese Ausführungsform des erfindungsgemäßen Verfahrens ist bevorzugt, da die Endgeräte somit für den Zugriff auf das erste Kommunikationsnetz nicht den zwischen dem ersten und dem zweiten Kommunikationsnetz aufgebauten Paketdatendienst verwenden müssen. Stattdessen kann von Seiten der Endgeräte jeweils der Aufbau eigener Paketdatendienste von dem ersten Kommunikationsnetz angefordert werden. Dabei können die entsprechenden Paketdatendienste auch zu anderen Netzknoten des ersten Kommunikationsnetzes aufgebaut werden als der von dem Zugangsknoten des zweiten Kommunikationsnetzes zu dem ersten Kommunikationsnetz aufgebaute Paketdatendienst.

In einer weiteren bevorzugten Ausführungsform des erfindungsgemäßen Verfahrens wird der Paketdatendienst zwischen den Endgeräten und dem ersten Kommunikationsnetz jeweils als gesicherte Datenverbindung aufgebaut. Dies kann beispielsweise in Form einer IPSec (IP Security)-Verbindung geschehen und ist vorteilhaft, da hierdurch die Vertraulichkeit und Integrität der übertragenen Daten geschützt wird.

Das erfindungsgemäße Verfahren kann vorzugsweise auch so ausgeprägt sein, dass die Endgeräte zur Nutzung von Diensten des ersten Kommunikationsnetzes den zwischen dem ersten und dem zweiten Kommunikationsnetz aufgebauten Paketdatendienst verwenden. Dabei kann eine Nutzung des zwischen dem ersten und dem zweiten Kommunikationsnetz aufgebauten Paketdatendienstes auch dann erfolgen, wenn die Endgeräte zur Nutzung von Diensten des ersten Kommunikationsnetzes jeweils einen eigenen, gegebenenfalls gesicherten Paketdatendienst zu dem ersten Kommunikationsnetz aufbauen, welche in diesem Fall in den Paketdatendienst zwischen dem ersten und dem zweiten Kommunikationsnetz eingebunden ist. Diese Ausgestaltungsform des erfindungsgemäßen Verfahrens ist vorteilhaft, da hierbei jeglicher Paketdatenverkehr zwischen dem ersten und dem zweiten Kommunikationsnetz, d. h. auch solcher, der von Endgeräten des zweiten Kommunikationsnetzes ein- bzw. ausgeht, über den im Rahmen des Anbindens des zweiten Kommunikationsnetzes an das erste Kommunikationsnetz aufgebauten Paketdatendienst erfolgen kann.

Vorzugsweise läuft das erfindungsgemäße Verfahren derart ab, dass sich die Endgeräte mittels der in dem Speichermedium gespeicherten Identität des zweiten Mobilfunknetzes gegenüber dem ersten Kommunikationsnetz authentifizieren und/oder autorisieren. Diese Ausführungsform ist vorteilhaft, da sie aus Sicht des Netzbetreibers oder Dienstanbieters des ersten Kommunikationsnetzes eine unmittelbare, direkte Abrechnung jeglicher von Endgeräten des zweiten Kommunikationsnetzes ausgehender Nutzung, d. h. beispielsweise Datenübertragung von und zu dem ersten Kommunikationsnetz oder Inanspruchnahme von Diensten des ersten Kommunikationsnetzes, mit dem Netzbetreiber bzw. Dienstanbieter des ersten Kommunikationsnetzes ermöglicht. Eine direkte Gebührenabrechnung zwischen dem Netzbetreiber des ersten Kommunikationsnetzes und den Nutzern der Endgeräte des zweiten Kommunikationsnetzes ist somit zwar möglich, aber nicht erforderlich.

In einer weiteren bevorzugten Ausführungsform des erfindungsgemäßen Verfahrens authentifizieren und/oder autorisieren sich die Endgeräte mittels in Speichermitteln der Endgeräte abgelegter Daten gegenüber dem ersten Kommunikationsnetz und/oder dem zweiten Kommunikationsnetz. Dies bietet den Vorteil, dass vorzugsweise eine Vergebührung der von einem Endgerät von und/oder zu dem zweiten Kommunikationsnetz übertragenen Daten bzw. von genutzten Diensten direkt und vorzugsweise ausschließlich zwischen dem ersten Kommunikationsnetz und dem Endgerät erfolgen kann. Bei den Speichermitteln handelt es sich vorzugsweise um eine SIM-Karte, auf der vorzugsweise das Endgerät identifizierende und zur Authentifizierung benötigte Daten abgelegt sind. Auf der SIM-Karte, im Rahmen der 3GPP-Standardisierung auch UICC (Universal Integrated Circuit Chip) genannt, befindet sich üblicherweise mindestens eine als (U)SIM ((Universal) Subscriber Identity Module) bezeichnete Applikation. Diese enthält üblicherweise alle teilnehmerspezifischen Daten wie etwa die internationale Mobilteilnehmer-Rufnummer MSISDN (Mobile Subscriber ISDN Number), die internationale Mobilteilnehmerkennung IMSI (International Mobile Subscriber Identity) und die bei der Anmeldung des Endgerätes im Mobilfunknetz zwecks Authentifizierung und Schlüsselvereinbarung verwendeten Routinen und Parameter. Darüber hinaus kann die SIM-Karte weitere Applikationen wie beispielsweise eine so genannte ISIM (IP Multimedia Services Identity Module) enthalten.

Das erfindungsgemäße Verfahren kann vorzugsweise auch so ablaufen, dass der Zugangsknoten seinen aktuellen Aufenthaltsort ermittelt und in der Anbindungsnachricht an den Kontaktknoten des ersten Kommunikationsnetzes sendet. Dies ist bevorzugt, da hiermit dem Kontaktknoten eine zusätzliche Information zur Verfügung gestellt wird, die dieser im Folgenden berücksichtigen kann. Vorzugsweise kann der Kontaktknoten somit in Abhängigkeit von dem aktuellen Aufenthaltsort des zweiten Kommunikationsnetzes (bzw. des Zugangsknotens) einen Netzknoten des zweiten Kommunikationsnetzes bestimmen, der den Paketdatendienst zu dem Zugangsknoten des zweiten Kommunikationsnetzes bereitstellt. Der Aufenthaltsort des zweiten Kommunikationsnetzes ist dem Kontaktknoten des ersten Kommunikationsnetzes nicht zwangsläufig von vorneherein bekannt, da bei dem erfindungsgemäßen Verfahren eine dynamische Anbindung des zweiten Kommunikationsnetzes an das erste Kommunikationsnetz erfolgt, welche die Möglichkeit wechselnder Aufenthaltsorte des zweiten Kommunikationsnetzes einschließt. Des Weiteren kann das Anbinden des zweiten Kommunikationsnetzes an das erste Kommunikationsnetz vorzugsweise unter Zwischenschaltung eines weiteren Kommunikationsnetzes, wie beispielsweise dem Internet, erfolgen, so dass der Aufenthaltsort des zweiten Kommunikationsnetzes für das erste Kommunikationsnetz nicht erkennbar oder vorbestimmt ist.

In einer weiteren bevorzugten Ausführungsform des erfindungsgemäßen Verfahrens stellt das erste Kommunikationsnetz dem zweiten Kommunikationsnetz Netzwerkdienste zur Verfügung. Bei solchen Netzwerkdiensten kann es sich beispielsweise um einen so genannten Firewall oder einen so genannten Network Address Translation (NAT) Dienst handeln. Durch das Anbinden des zweiten Kommunikationsnetzes an das erste Kommunikationsnetz wird es ermöglicht, dass das zweite Kommunikationsnetz einen Dienst des ersten Kommunikationsnetzes nutzen bzw. anbieten kann, den es selbst nicht unterstützt. Die Vereinbarung zwischen dem ersten Kommunikationsnetz und dem zweiten Kommunikationsnetz darüber, welche Netzwerkdienste für das zweite Kommunikationsnetz nutzbar sein sollen, kann entweder "online" im Rahmen der Anbindung erfolgen, oder aber vorab vertraglich festgelegt und "offline" statisch konfiguriert werden.

Vorzugsweise ist das erfindungsgemäße Verfahren so ausgestaltet, dass als Speichermedium eine durch den Netzbetreiber oder Dienstanbieter des ersten Kommunikationsnetzes ausgegebene Smart-Karte, eine SIM-Karte, oder eine Datei verwendet wird. Bei einer Smart-Karte, auch als Chipkarte oder Integrated Circuit Card (ICC) bezeichnet, handelt es sich um eine üblicherweise aus Plastik ausgebildete Karte mit einem eingebauten Mikrochip, der üblicherweise zumindest einen Speicher enthält. Eine SIM (Subscriber Identity Module)-Karte stellt eine besondere Ausführungsform einer Smart-Karte der Art dar, wie sie üblicherweise zur Authentifizierung von Nutzern innerhalb eines Mobilfunknetzes verwendet wird. Alternativ zu den beiden vorgenannten hardwarebasierten Lösungen kann das Speichermedium auch in Form einer Datei ausgebildet sein. Hierbei handelt es sich um eine softwarebasierte Lösung, durch welche die Ausgabe einer gegenständlichen Karte vermieden wird. Auch bei Verwendung einer Datei als Speichermedium muss ebenso wie bei Verwendung einer SIM- oder Smart-Karte jedoch sichergestellt werden, dass die auf dem Speichermedium abgelegten Informationen gegen Manipulationen durch Unberechtigte geschützt sind. Die Verwendung einer SIM-Karte, einer Smart-Karte oder einer Datei als Speichermedium ist bevorzugt, da hierdurch auf eine einfache und universelle Art und Weise die für das Anbinden des zweiten Kommunikationsnetzes an das erste Kommunikationsnetz erforderlichen Parameter abgelegt und dem zweiten Kommunikationsnetz zur Verfügung gestellt werden können.

Das erfindungsgemäße Verfahren kann vorteilhafterweise auch so ausgestaltet sein, dass in dem Speichermedium weitere das zweite Kommunikationsnetz betreffende Daten abgelegt sind. Bei diesen Daten kann es sich um jegliche Daten handeln, welche für das zweite Kommunikationsnetz in Bezug auf das erste Kommunikationsnetz bzw. für die Vertragsbeziehung zwischen dem Netzbetreiber des zweiten Kommunikationsnetzes und demjenigen des ersten Kommunikationsnetzes von Bedeutung sind.

Vorzugsweise wird bei dem erfindungsgemäßen Verfahren als Adresse eine Internetprotokoll (IP)-Adresse verwendet. Diese Ausgestaltung des erfindungsgemäßen Verfahrens ist vorteilhaft, da IP-Adressen üblicherweise für die Adressierung im Rahmen der Übertragung von Paketdaten verwendet werden. Alternativ kann es sich bei der Adresse beispielsweise auch um eine logische Adresse handeln, welche den Kontaktknoten des ersten Kommunikationsnetzes identifiziert, und beispielsweise mittels des so genannten Domain Name System (DNS)-Verfahrens in eine IP-Adresse umgesetzt wird. Dabei ist es nicht erforderlich, dass die logische Adresse Informationen zum Ort des Kontaktknotens enthält.

Das erfindungsgemäße Verfahren kann weiterhin vorzugsweise auch so ablaufen, dass der Zugangsknoten als Speicherknoten verwendet wird. Diese Ausführungsform ist vorteilhaft, da somit der Zugangsknoten einen unmittelbaren Zugriff auf das Speichermedium besitzt, wodurch die Notwendigkeit eines separaten Speicherknotens und einer Kommunikation zwischen dem Zugangsknoten und dem Speicherknoten entfällt.

Als erstes Kommunikationsnetz kann ein beliebiges zur Übertragung von Paketdaten geeignetes Kommunikationsnetz verwendet werden. Hierbei kann es sich sowohl um ein Festnetz als auch um ein Mobilfunknetz beispielsweise nach dem CDMA (Code Division Multiple Access)-Standard handeln. Besonders bevorzugt ist jedoch die Ausführungsform des erfindungsgemäßen Verfahrens, dass als erstes Kommunikationsnetz ein Mobilfunknetz nach dem 3rd Generation Partnership Project (3GPP)-Standard verwendet wird. Hierbei handelt es sich vorzugsweise um ein Mobilfunknetz nach dem GPRS (General Packet Radio Service)- oder dem UMTS (Universal Mobile Telecommunications System)-Standard. Die Verwendung eines Mobilfunknetzes nach dem 3GPP-Standard als erstes Kommunikationsnetz ist vorteilhaft, da es sich hierbei um einen weit verbreiteten Mobilfunkstandard handelt, der eine paketdatenbasierte Datenübertragung in Mobilfunknetzen ermöglicht. Aufgrund der weiten Verbreitung und der damit verbundenen hohen Anzahl von Nutzern bzw. Endgeräten dieses Standards stehen weltweit in vielen verschiedenen Ländern und Regionen Kommunikationsnetze nach dem 3GPP-Standard zum Anbinden eines zweiten Kommunikationsnetzes zur Verfügung.

Bei dem zweiten Kommunikationsnetz kann es sich beispielsweise um ein Kommunikationsnetz nach dem Bluetooth-Standard handeln. In einer besonders bevorzugten Ausführungsform des erfindungsgemäßen Verfahrens wird als zweites Kommunikationsnetz ein Wireless Local Area Network (WLAN), ein Wireless Metropolitan Area Network (WMAN) oder ein Kommunikationsnetz nach dem Worldwide Interoperability for Microwave Access-Standard (WiMAX) verwendet. Bei diesen Arten von Kommunikationsnetzen handelt es sich um weit verbreitete Zugangsnetze, welche an verschiedensten, manchmal auch als Hotspots bezeichneten Orten bzw. in als Hotzones bezeichneten Gebieten einen Zugang in Datennetze ermöglichen.

Die Erfindung betrifft darüber hinaus eine Anordnung zum Anbinden eines zweiten Kommunikationsnetzes an ein erstes Komgemäss Anspruch 23. Bezüglich der Anordnung liegt der vorliegenden Erfindung die Aufgabe zugrunde, eine flexible und einfache Anordnung zum Anbinden eines zweiten Kommunikationsnetzes an ein erstes Kommunikationsnetz anzugeben.
Die vorstehende Aufgabe wird erfindungsgemäß gelöst durch eine Anordnung zum Anbinden eines zweiten Kommunikationsnetzes an ein erstes Kommunikationsnetz, wobei das zweite Kommunikationsnetz einen Speicherknoten mit einem Speichermedium aufweist, in dem eine für das zweite Kommunikationsnetz spezifische Identität und eine einen Kontaktknoten des ersten Kommunikationsnetzes identifizierende Adresse abgelegt sind, sowie einen Zugangsknoten zum Auslesen oder Empfangen der für das zweite Kommunikationsnetz spezifischen Identität aus dem Speichermedium des Speicherknotens und zum Senden einer die für das zweite Kommunikationsnetz spezifische Identität enthaltenden Anbindungsnachricht an den durch die in dem Speichermedium abgelegte Adresse vorbestimmten Kontaktknoten des ersten Kommunikationsnetzes, und der Kontaktknoten zum Bereitstellen eines Paketdatendienstes zu dem Zugangsknoten unter Bewirken des Anbindens des zweiten Kommunikationsnetzes an das erste Kommunikationsnetz ausgebildet ist.
Die erfindungsgemäße Anordnung ist vorteilhaft, da sie ein dynamisches und ortsunabhängiges Anbinden des zweiten Kommunikationsnetzes an das erste Kommunikationsnetz ermöglicht. Dies geschieht dadurch, dass in dem Speichermedium des Speicherknotens eine für das zweite Kommunikationsnetz spezifische Identität und eine einen Kontaktknoten des ersten Kommunikationsnetzes identifizierende Adresse abgelegt sind, welche im Rahmen der Anbindung des zweiten Kommunikationsnetzes an das erste Kommunikationsnetz verwendet werden. Eine statische, auf den Ort der Anbindung der Kommunikationsnetze abgestimmte Konfiguration des ersten und/oder des zweiten Kommunikationsnetzes und damit eine unflexible Konfiguration der Anbindung des zweiten Kommunikationsnetzes an das erste Kommunikationsnetz, welche beispielsweise einen Ortswechsel des zweiten Kommunikationsnetzes ohne eine aufwändige Änderung der Konfiguration ausschließen würde, ist somit nicht erforderlich.

Vorzugsweise ist die erfindungsgemäße Anordnung so ausgestaltet, dass in dem Speichermedium für die Authentifizierung des zweiten Kommunikationsnetzes verwendete Authentifizierungsdaten abgelegt sind. Das Ablegen der Authentifizierungsdaten in dem Speichermedium ist vorteilhaft, da somit eine wechselseitige Identitätsüberprüfung des ersten Kommunikationsnetzes und des zweiten Kommunikationsnetzes ermöglicht wird. Die Authentifizierung des ersten Kommunikationsnetzes durch das zweite Kommunikationsnetz kann dabei vorzugsweise unter Verwendung von so genannten Zertifikaten erfolgen. Durch die wechselseitige Authentifizierung wird die Voraussetzung dafür geschaffen, dass ein Paketdatendienst zwischen den beiden Kommunikationsnetzen in verschlüsselter Form bereitgestellt werden kann.

In einer weiteren vorteilhaften Ausgestaltung der erfindungsgemäßen Anordnung ist das zweite Kommunikationsnetz über zumindest ein weiteres Kommunikationsnetz an das erste Kommunikationsnetz angebunden. Diese Ausgestaltungsform ist bevorzugt, da die Anbindung somit beispielsweise unter Zwischenschaltung des Internets erfolgen kann. Dadurch, dass die Notwendigkeit einer direkten Verbindung zwischen dem zweiten und dem ersten Kommunikationsnetz entfällt, kann eine weitestgehend ortsunabhängige Anbindung des zweiten Kommunikationsnetzes an das erste Kommunikationsnetz erfolgen.

Die erfindungsgemäße Anordnung kann vorteilhafterweise auch so aussehen, dass an das zweite Kommunikationsnetz Endgeräte angeschlossen sind. Die Endgeräte können dabei beispielsweise nicht nur die von dem zweiten Kommunikationsnetz angebotene Funktionalität nutzen, sondern darüber hinaus auch über das zweite Kommunikationsnetz auf Dienste und/oder Daten des ersten Kommunikationsnetzes zugreifen.

In einer weiteren bevorzugten Ausführungsform der erfindungsgemäßen Anordnung weisen die Endgeräte Speichermittel auf, in denen Daten zur Authentifizierung und/oder zur Autorisierung des jeweiligen Endgerätes durch das erste und/oder das zweite Kommunikationsnetz abgelegt sind. Dies ist vorteilhaft, da somit alternativ zu einer Authentifizierung und/oder Autorisierung der Endgeräte unter Verwendung des Speichermediums des Speicherknotens auch eine unmittelbare Authentifizierung und/oder Autorisierung des jeweiligen Endgerätes durch das erste und/oder insbesondere auch durch das zweite Kommunikationsnetz ermöglicht wird.

Vorzugsweise ist die erfindungsgemäße Anordnung so ausgestaltet, dass das Speichermedium eine durch den Netzbetreiber oder Dienstanbieter des ersten Kommunikationsnetzes ausgegebene Smart-Karte, eine SIM-Karte oder eine Datei ist. Hierdurch wird vorteilhafterweise eine einfache und flexible Ausgabe der von dem zweiten Kommunikationsnetz für das Anbinden an das erste Kommunikationsnetz benötigten Parameter durch den Betreiber des ersten Kommunikationsnetzes ermöglicht. Ähnlich dem bekannten Ausgeben einer SIM-Karte für ein einzelnes Endgerät kann somit hardware- oder software-basiert von dem Betreiber oder Dienstanbieter des ersten Kommunikationsnetzes ein Speichermedium ausgegeben werden, welches es dem zweiten Kommunikationsnetz ermöglicht, ortsunabhängig und flexibel an das erste Kommunikationsnetz anzubinden.

Die erfindungsgemäße Anordnung ist vorzugsweise so ausgeprägt, dass in dem Speichermedium weitere das zweite Kommunikationsnetz betreffende Daten abgelegt sind.

In einer weiteren bevorzugten Ausführungsform der erfindungsgemäßen Anordnung ist der Zugangsknoten der Speicherknoten. Dadurch, dass der Zugangsknoten zusätzlich die Funktion des Speicherknotens übernimmt und somit unmittelbaren Zugriff auf das Speichermedium bekommt, vereinfacht sich die Anordnung. Die Notwendigkeit eines separaten Netzknotens für den Speicherknoten und einer Kommunikation zwischen dem Zugangsknoten und dem Speicherknoten entfällt.

Die erfindungsgemäße Anordnung kann vorzugsweise so ausgebildet sein, dass das erste Kommunikationsnetz ein Mobilfunknetz nach dem 3rd Generation Partnership Project (3GPP)-Standard ist. Wie bereits zuvor erläutert, ist die Verwendung eines Mobilfunknetzes nach dem 3GPP-Standard als erstes Kommunikationsnetz vorteilhaft, da es sich hierbei um einen weit verbreiteten Mobilfunkstandard der dritten Generation handelt, welcher die Bereitstellung leistungsfähiger Paketdatendienste ermöglicht.

Die erfindungsgemäße Anordnung kann vorteilhafterweise auch so aussehen, dass das zweite Kommunikationsnetz ein Wireless Local Area Network (WLAN), ein Wireless Metropolitan Area Network (WMAN) oder ein Kommunikationsnetz nach dem Worldwide Interoperability for Microwave Access-Standard (WiMAX) ist. Diese Ausführungsform ist bevorzugt, da es sich bei Netzen nach diesen Standards um weit verbreitete Zugangstechnologien zur Nutzung paketdatenvermittelter Netze und Dienste handelt.

Zur weiteren Beschreibung der Erfindung zeigt
- Figur 1: eine schematische Skizze eines ersten Ausführungsbeispiels der erfindungsgemäßen Anordnung,
- Figur 2: eine schematische Skizze eines zweiten Ausführungsbeispiels der erfindungsgemäßen Anordnung,
- Figur 3: eine schematische Skizze eines dritten Ausführungsbeispiels der erfindungsgemäßen Anordnung und
- Figur 4: eine schematische Skizze eines Ausführungsbeispiels des erfindungsgemäßen Speichermediums.

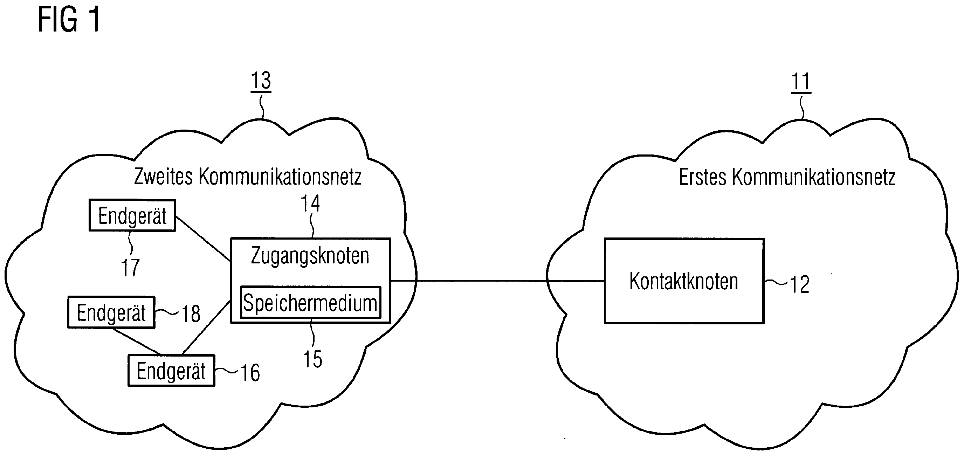

In Figur 1 ist in einer schematischen Skizze ein Ausführungsbeispiel der erfindungsgemäßen Anordnung dargestellt. Gezeigt ist ein erstes Kommunikationsnetz 11 in Form eines Mobilfunknetzes nach dem 3GPP-Standard. Alternativ hierzu könnte es sich bei dem ersten Kommunikationsnetz 11 auch um ein Kommunikationsnetz nach einem beliebigen anderen Festnetz- oder Mobilfunk-Standard handeln.

Das erste Kommunikationsnetz 11 weist einen Kontaktknoten 12 in Form eines AAA (Authentication, Authorization and Accounting)-Servers auf. Bei dem Kontaktknoten 12 könnte es sich in Abhängigkeit von der Art des ersten Kommunikationsnetzes 11 alternativ beispielsweise auch um einen der folgenden Netzknoten handeln: einen so genannten Radio Network Controller, einen WLAN Access Gateway (WAG), einen so genannten Paket Data Gateway (PDG) oder einen GGSN (GPRS Gateway Support Node).

Darüber hinaus zeigt die Figur 1 ein zweites Kommunikationsnetz 13 in Form eines WLAN, welches an dem Ort eines bevorstehenden Großereignisses aufgebaut worden ist. Alternativ könnte das zweite Kommunikationsnetz 13 beispielsweise durch ein Kommunikationsnetz nach dem WiMAX- oder dem 3GPP-Standard, ein so genanntes Personal Network, ein so genanntes Personal Area Network (PAN), ein so genanntes Body Area Network (BAN) oder ein so genanntes Ad-hoc Netzwerk gegeben sein. Bei einem Personal Network handelt es sich dabei um mehrere Endgeräte eines Nutzers, die über ein Kommunikationsnetz unabhängig von der aktuellen Position der Endgeräte miteinander in Verbindung stehen, d. h. miteinander kommunizieren können. Als Personal Area Network werden allgemein mehrere netzwerkfähige Endgeräte üblicherweise eines Nutzers bezeichnet, die zu einem Netzwerk zusammengeschlossen sind. Der Zugang der Endgeräte zu einem Kommunikationsnetz erfolgt hierbei über eines der Endgeräte, welches die Funktion eines mobilen Routers übernimmt und beispielsweise als einziges der Endgeräte über eine SIM-Karte zur Authentifizierung und Autorisierung gegenüber dem Kommunikationsnetz verfügen kann. Der Begriff Body Area Network bezeichnet ein Kommunikationsnetz, welches aus am menschlichen Körper getragenen Sensoren und Aktoren besteht, mittels welcher über ein zentrales Endgerät Daten an ein Kommunikationsnetz übertragen werden können. Als Ad-hoc Netzwerk wird üblicherweise ein dynamisch organisiertes Netzwerk mit Endgeräten bezeichnet, die miteinander kommunizieren können.

Das zweite Kommunikationsnetz 13 weist einen Zugangsknoten 14 in Form eines so genannten WLAN Access Points auf. Alternativ könnte es sich bei dem Zugangsknoten 14 in Abhängigkeit von der Art des zweiten Kommunikationsnetzes 13 beispielsweise um eines bzw. einen der folgenden Netzelemente bzw. Netzknoten handeln: einen Gateway zwischen den Netzen zweier Netzbetreiber, einen so genannten WLAN Access Router, einen mobilen Router oder aber einen beliebigen Netzknoten bzw. ein beliebiges mobiles Endgerät, welcher bzw. welches die Funktion des Zugangsknotens übernimmt.

Der Zugangsknoten 14 des zweiten Kommunikationsnetzes 13 weist ein Speichermedium 15 auf, d. h. ist gleichzeitig als Speicherknoten ausgebildet. An den Zugangsknoten 14 sind über eine Luftschnittstelle WLAN-fähige, d. h. zur Datenübertragung über ein WLAN ausgebildete, Endgeräte 16 und 17 angeschlossen. Darüber hinaus ist ein Endgerät 18 erkennbar, welches mittelbar, d. h. über das Endgerät 16 an den Zugangsknoten 14 des zweiten Kommunikationsnetzes 13 angebunden ist.

Bei den Endgeräten 16 und 18 handelt es sich um zwei Endgeräte desselben Nutzers, die innerhalb des zweiten Kommunikationsnetzes 13 zu einem Personal Area Network (PAN) zusammengeschlossen sind. Hierdurch kann das Endgerät 18, welches im Gegensatz zu dem Endgerät 16 nicht über eine eigene SIM-Karte verfügt, über das Endgerät 16 ebenfalls auf das WLAN zugreifen, d. h. das WLAN-fähige Endgerät 16 übernimmt innerhalb des PAN die Funktion eines mobilen Routers, d. h. eines Netzknotens. Authentifizierung und Autorisierung gegenüber dem ersten Kommunikationsnetz 11 erfolgen für das gesamte PAN durch das Endgerät 16. Dies ermöglicht es dem Endgerät 18 ebenso wie dem Endgerät 16 das zweite Kommunikationsnetz 13 zu nutzen.

Das Verfahren zum Anbinden des zweiten Kommunikationsnetzes 13 an das erste Kommunikationsnetz 11 läuft nun so ab, dass der Zugangsknoten 14 zunächst aus dem Speichermedium 15 eine für das zweite Kommunikationsnetz 13 spezifische Identität und die Adresse des Kontaktknotens 12 des ersten Kommunikationsnetzes 11 ausliest.

Im nächsten Schritt sendet der Zugangsknoten 14 die für das zweite Kommunikationsnetz 13 spezifische Identität in einer Anbindungsnachricht an die Adresse des Kontaktknotens 12 des ersten Kommunikationsnetzes 11. Darüber hinaus kann der Zugangsknoten 14 in der Anbindungsnachricht auch eine Information zu seinem aktuellen Aufenthaltsort an den Kontaktknoten 12 senden. Der Aufenthaltsort kann hierbei aus einem von dem ersten Kommunikationsnetz 11 ausgestrahlten Signal ermittelt werden und beispielsweise durch die Identität der Mobilfunkzelle (auch als Cell-ID bezeichnet), das Aufenthaltsgebiet (auch als Routing Area bezeichnet) oder die Identität eines lokalen Kommunikationsnetzes gegeben sein.

Basierend auf der Anbindungsnachricht stellt der Kontaktknoten 12 einen Paketdatendienst zu dem Zugangsknoten 14 bereit. Alternativ hierzu könnte der Kontaktknoten 12 des ersten Mobilfunknetzes 11 die Anbindungsnachricht auch an einen anderen Netzknoten des ersten Kommunikationsnetzes 11 weiterleiten, der dann auf Seiten des ersten Kommunikationsnetzes 11 die weitere Bearbeitung der Anbindungsnachricht übernehmen würde.

Der Paketdatendienst bzw. Datenübertragungsdienst zwischen dem ersten Kommunikationsnetz 11 und dem zweiten Kommunikationsnetz 13 kann teilweise oder komplett drahtlos, d. h. in Form einer Funkverbindung, erbracht werden.

Im nächsten Schritt erfolgt zwischen dem Kontaktknoten 12 und dem Zugangsknoten 14 eine wechselseitige Authentifizierung. Darüber hinaus kann der Kontaktknoten 12 basierend auf der durch eine erfolgreiche Authentifizierung verifizierten Identität des zweiten Kommunikationsnetzes 13 überprüfen, ob das zweite Kommunikationsnetz 13 zum Anbinden an das erste Kommunikationsnetz 11 autorisiert, d. h. berechtigt, ist.

Entsprechend den vorherigen Ausführungen wird der bereitgestellte Paketdatendienst zum Austausch von die die Authentifizierung und die Autorisierung betreffenden Signalisierungsnachrichten zwischen dem zweiten Kommunikationsnetz 13 und dem ersten Kommunikationsnetz 11 verwendet. Darüber hinaus kann der Zugangsknoten 14 mittels des Paketdatendienstes die Endgeräte 16, 17 und 18 betreffende Vergebührungsnachrichten an den Kontaktknoten 12 senden.

Im nächsten Schritt wird dem Zugangsknoten 14 durch den Kontaktknoten 12 eine dynamische IP-Adresse zugewiesen, welche eine Datenübertragung an den Zugangsknoten 14 ermöglicht. Dies ist jedoch nur dann erforderlich, wenn die IP-Adresse des Zugangsknotens 14 nicht statisch vorkonfiguriert ist.

Die Endgeräte 16 und 17, die über eine eigene SIM-Karte verfügen und diese verwenden wollen, können sich nun gegenüber dem ersten Kommunikationsnetz 11 authentifizieren. Dabei kann der Zugangsknoten 14 die entsprechenden Authentifizierungsnachrichten mittels des bereitgestellten Paketdatendienstes an den Kontaktknoten 12 weiterleiten. Das Endgerät 18, welches zusammen mit dem Endgerät 16 ein PAN bildet und selbst nicht über eine SIM-Karte verfügt, nutzt die Authentifizierung des Endgerätes 18 und benötigt somit keine eigene Authentifizierung.

Alternativ könnte die Authentifizierung (und gegebenenfalls eine anschließende Autorisierung) der Endgeräte 16, 17 und 18 gegenüber dem ersten Kommunikationsnetz 11 generell oder nur für den Fall, dass die Endgeräte 16, 17 und 18 im Gegensatz zu den vorherigen Ausführungen keine eigenen SIM-Karten aufweisen, mittels des Speichermediums 15 des Zugangsknotens 14 erfolgen. In diesem Fall ist aus Sicht des Netzbetreibers des Kommunikationsnetzes 11 der Netzbetreiber des Kommunikationsnetzes 13 für den gesamten durch die Endgeräte 16, 17 und 18 bezüglich des ersten Kommunikationsnetzes 11 verursachten Paketdatenverkehr verantwortlich. Dies betrifft somit alle Paketdaten, die von den Endgeräten aus dem ersten Kommunikationsnetz 11 empfangen werden bzw. an das erste Kommunikationsnetz 11 übertragen werden. Dies hat zur Konsequenz, dass der Netzbetreiber des ersten Kommunikationsnetzes 11 die Gebühren für den entsprechenden Paketdatenverkehr mit dem Netzbetreiber des zweiten Kommunikationsnetzes 13 abrechnet. Die Vergebührung der Endgeräte 16, 17 und 18 bzw. deren Nutzer erfolgt in diesem Fall ausschließlich durch den Netzbetreiber des zweiten Kommunikationsnetzes 13.

Grundsätzlich kann sich auch lediglich ein Teil der Endgeräte 16, 17 und 18 mittels des Speichermediums 15 gegenüber dem ersten Kommunikationsnetz 11 authentifizieren, während ein anderer Teil der Endgeräte sich unmittelbar selbst gegenüber dem Kontaktknoten 12 authentifiziert.

Die Vergabe von IP-Adressen an die Endgeräte 16, 17 und 18 kann auf verschiedene Arten erfolgen. Eine Möglichkeit besteht darin, dass der Zugangsknoten 14 einen als Network Address Translation (NAT) bezeichneten Dienst erbringt, d. h. den Endgeräten 16, 17 und 18 lokale IP-Adressen zuweist. Alternativ können die Endgeräte 16, 17 und 18 ihre IP-Adresse unter Verwendung eines dem Zugangsknoten 14 zugeordneten Präfixes selbst konfigurieren. Des Weiteren ist es auch möglich, dass die Endgeräte 16, 17 und 18 ihre jeweiligen IP-Adressen von dem ersten Kommunikationsnetz 11 zugewiesen bekommen.

In einem weiteren Verfahrensschritt können das erste 11 und das zweite Kommunikationsnetz 13 nun vereinbaren, ob und gegebenenfalls welche Netzwerkdienste dem zweiten Kommunikationsnetz 13 durch das erste Kommunikationsnetz 11 zur Verfügung gestellt werden. Bei einem solchen Netzwerkdienst kann es sich beispielsweise um einen Network Address Translation (NAT)-Dienst, einen Firewall-Dienst oder auch um spezielle Vereinbarungen zur Vergebührung handeln. So kann etwa festgelegt werden, dass die Vergebührung basierend auf den IP-Adressen der Endgeräte 16, 17 und 18 erfolgt. Alternativ könnten beispielsweise die zu einem PAN zusammengeschlossenen Endgeräte 16 und 18 basierend auf der SIM-Karte des Endgerätes 16 vergebührt werden. Dies könnte selbst dann geschehen, wenn beide Endgeräte 16 und 18 jeweils über eine eigene SIM-Karte verfügen würden.

Die Endgeräte 16, 17 und 18 können nun eigene, gesicherte Paketdatendienste zu dem ersten Kommunikationsnetz 11 bereitstellen bzw. die entsprechende Bereitstellung eines Paketdatendienstes von dem ersten Kommunikationsnetz 11 anfordern. Hierbei kann der bereits zwischen den beiden Kommunikationsnetzen 11 und 12 bestehende Paketdatendienst verwendet werden. Alternativ können jedoch auch vollkommen unabhängige Paketdatendienste bereitgestellt werden. Darüber hinaus können die Endgeräte 16, 17 und 18 auch über das zweite Kommunikationsnetz 13 zusätzlich Paketdatendienste zu anderen Kommunikationsnetzen, wie beispielsweise dem Internet, aufbauen.

Wie bereits erwähnt könnte es sich bei dem in Figur 1 dargestellten zweiten Kommunikationsnetz 13 anstatt um ein WLAN auch insgesamt um ein Personal Area Network (PAN) handeln. In diesem Fall würde das PAN nicht nur die Endgeräte 16 und 18, sondern zusätzlich auch das Endgerät 17 und den Zugangsknoten 14 umfassen. Der Zugangsknoten 14 wäre in diesem Fall ein Endgerät, welches ein Speichermodul 15 in Form einer SIM-Karte aufweist. Mittels des Speichermoduls 15 könnte nun das PAN entsprechend dem zuvor beschriebenen Verfahren an das erste Kommunikationsnetz 11 angebunden werden. Dies verdeutlicht, dass die beschriebene Anordnung und das beschriebene Verfahren zum Anbinden unterschiedlichster Kommunikationsnetze verwendet werden können.

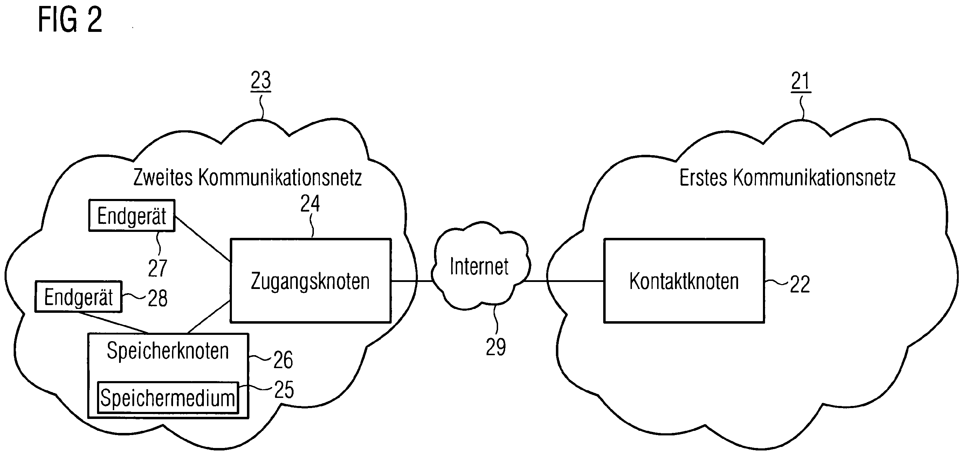

Figur 2 zeigt in einer schematischen Skizze ein zweites Ausführungsbeispiel der erfindungsgemäßen Anordnung. Analog zu Figur 1 ist ein erstes Kommunikationsnetz 21 in Form eines Mobilfunknetzes nach dem 3GPP-Standard, wie beispielsweise dem GPRS-Standard, dargestellt. Das erste Kommunikationsnetz 21 weist einen Kontaktknoten 22 auf. Darüber hinaus zeigt die Figur 2 ein zweites Kommunikationsnetz 23 mit einem Zugangsknoten 24. Bei dem zweiten Kommunikationsnetz 23 handelt es sich um ein WLAN, welches einer Firma gehört, die sich auf die Organisation von Großereignissen spezialisiert hat. Dabei bietet die Firma als eine ihrer Dienstleistungen bei den Großereignissen mittels eines Zugangsknotens 24 in Form eines so genannter WLAN Access Routers einen Zugang zum Internet und zu Diensten in 3GPP-Netzen an. Dabei sind an einen WLAN Access Router üblicherweise mehrere WLAN Access Points angeschlossen. Da Großereignisse, wie beispielsweise Olympische Spiele oder Fußballweltmeisterschaften, üblicherweise zeitlich begrenzt sind und an wechselnden Orten stattfinden, bedeutet dies, dass das gesamte WLAN der Firma häufig seinen Ort wechselt, da es jeweils an dem aktuellen Ort des jeweiligen Großereignisses aufgebaut wird. Nach dem Aufbau ist jeweils ein Anbinden des zweiten Kommunikationsnetzes 23 an das erste Kommunikationsnetz 21 erforderlich.

Der Zugangsknoten 24 ist nicht notwendigerweise unmittelbar mit dem ersten Kommunikationsnetz 21 verbunden. Stattdessen erfolgt die Verbindung zwischen dem ersten Kommunikationsnetz 21 und dem zweiten Kommunikationsnetz 23 in dem Ausführungsbeispiel der Figur 2 über ein zwischengeschaltetes weiteres Kommunikationsnetz 29. Bei dem zwischengeschalteten weiteren Kommunikationsnetz 29 handelt es sich hierbei um das Internet. So kann von dem Zugangsknoten 24 des zweiten Kommunikationsnetzes 23 etwa eine DSL (Digital Subscriber Line)-Verbindung über das weitere Kommunikationsnetz 29 zu dem Kontaktknoten 22 des ersten Kommunikationsnetzes 21 bereitgestellt werden. Alternativ hierzu können die Netzbetreiber des weiteren Kommunikationsnetzes 29 und des ersten Kommunikationsnetzes 21 eine so genannte Roamingvereinbarung getroffen haben. Eine solche Vereinbarung erlaubt es Endgeräten 27 und 28 von Nutzern, die einen Vertrag mit dem Netzbetreiber des ersten Kommunikationsnetzes 21 haben, das weitere Kommunikationsnetz 29 zu nutzen. In diesem Fall authentifiziert und autorisiert das weitere Kommunikationsnetz 29 die Endgeräte 27 und 28 üblicherweise basierend auf von dem ersten Kommunikationsnetz 21 empfangenen Informationen.

Sofern die Netzbetreiber des weiteren Kommunikationsnetzes 29 und des ersten Kommunikationsnetzes 21 keine Roamingvereinbarung getroffen haben, so besteht alternativ die Möglichkeit, dass der Netzbetreiber des zweiten Kommunikationsnetzes 23 einen Vertrag mit dem Netzbetreiber des weiteren Kommunikationsnetzes 29 abgeschlossen hat, der dem zweiten Kommunikationsnetz 23 die Nutzung des weiteren Kommunikationsnetzes 29 ermöglicht.

In dem Ausführungsbeispiel der Figur 2 weist das zweite Kommunikationsnetz 23 neben dem Zugangsknoten 24 einen Speicherknoten 26 auf. Dieser besitzt Zugriff auf das Speichermedium 25. Zwischen dem Zugangsknoten 24 und dem Speicherknoten 26 besteht eine Verbindung, über die der Zugangsknoten 24 diejenigen Daten aus dem Speichermedium 25 empfangen oder auslesen kann, die er für das Anbinden des zweiten Kommunikationsnetzes 23 an das erste Kommunikationsnetz 21 benötigt.

Nach Anbinden des ersten Kommunikationsnetzes 21 an das zweite Kommunikationsnetz 23 können die Endgeräte 27 und 28 mittels des zweiten Kommunikationsnetzes 23 und des zwischengeschalteten weiteren Kommunikationsnetzes 29 auf Daten und/oder Dienste des ersten Kommunikationsnetzes 21 zugreifen. Hierzu findet eine Datenübertragung per Funk zwischen dem Endgerät 27 und dem Zugangsknoten 24 statt, bei dem es sich um einen WLAN Access Router handelt. Das Endgerät 28 ist mittelbar über den Speicherknoten 26, bei dem es sich um einen WLAN Access Point handelt, an den Zugangsknoten 24 angebunden.

Es sei darauf hingewiesen, dass an oder über das zweite Kommunikationsnetz 23 auch ein drittes Kommunikationsnetz oder mehrere dritte Kommunikationsnetze mittels des beschriebenen Verfahrens angebunden werden können. Dabei kann die Anbindung des dritten Kommunikationsnetzes unmittelbar an das zweite Kommunikationsnetz 23 vorgenommen werden, d. h. das dritte Kommunikationsnetz sendet eine Anbindungsnachricht an einen Kontaktknoten des zweiten Kommunikationsnetzes 23. Darüber hinaus ist es jedoch auch möglich, dass das zweite Kommunikationsnetz 23 bezüglich des dritten Kommunikationsnetzes die Funktion eines zwischengeschalteten weiteren Kommunikationsnetzes übernimmt, d. h. in diesem Fall sendet ein Zugangsknoten des dritten Kommunikationsnetzes die Anbindungsnachricht über das zweite Kommunikationsnetz 23 an den Kontaktknoten 22 des ersten Kommunikationsnetzes 21.

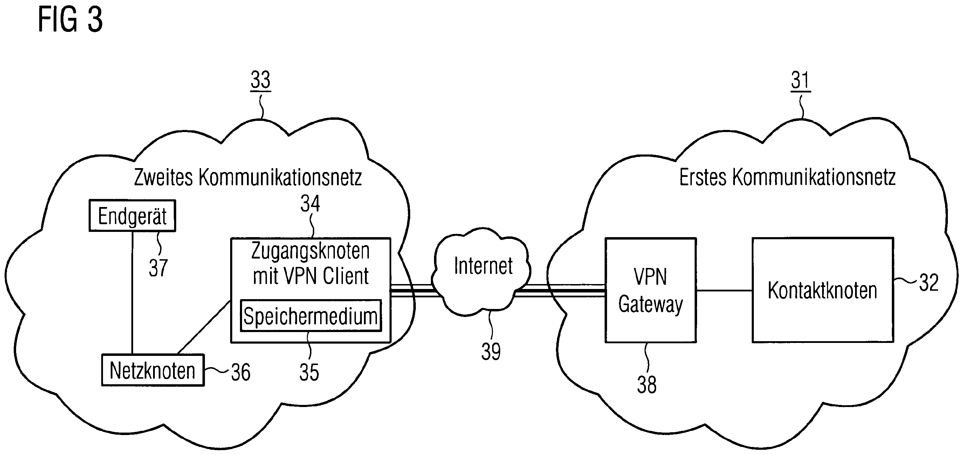

Figur 3 zeigt in einer schematischen Skizze ein drittes Ausführungsbeispiel der erfindungsgemäßen Anordnung. Dargestellt ist wiederum ein zweites Kommunikationsnetz 33, welches über ein weiteres Kommunikationsnetz 39 in Form des Internets an ein erstes Kommunikationsnetz 31 in Form eines Mobilfunknetzes nach dem 3GPP-Standard angebunden ist. Konkret ist der Zugangsknoten 34, der einen so genannten VPN (Virtual Privat Network) Client enthält, über das weitere Kommunikationsnetz 39 und über einen so genannten VPN Gateway 38 an den in Form eines AAA-Servers ausgebildeten Kontaktknoten 32 angeschlossen. Da zwischen dem ersten Kommunikationsnetz 31 und dem zweiten Kommunikationsnetz 33 ein öffentliches, ungesichertes weiteres Kommunikationsnetz 39 geschaltet ist, erfolgt die Datenübertragung zwischen dem Zugangsknoten 34 und dem Kontaktknoten 32 mittels eines so genannten VPN-Tunnels. Mittels dieses Tunnels kann eine gesicherte, von der Umgebung abgeschirmte Datenübertragung zwischen dem ersten Kommunikationsnetz 31 und dem zweiten Kommunikationsnetz 33 erfolgen. Diese VPN-Verbindung wird analog zu den vorherigen Ausführungen zu den Figuren 1 und 2 beispielsweise für die Signalisierung vergebührungsrelevanter Daten verwendet. Hierbei kann eine gebräuchliche VPN-Technik wie beispielsweise IPSec (IP Security) oder L2TP (Layer 2 Tunneling Protocol) zum Einsatz kommen. Alternativ hierzu kann beispielsweise auch TLS (Transport Layer Security) oder DTLS (Datagram TLS) für einen gesicherten Datenaustausch verwendet werden.

Das Anbinden des zweiten Kommunikationsnetzes 33 an das erste Kommunikationsnetz 31 erfolgt über den Kontaktknoten 32 in Form eines AAA-Servers. Mit der in dem Speichermedium 35 abgelegten Adresse des Kontaktknotens 32 des ersten Kommunikationsnetzes 33 und der ebenfalls in dem Speichermedium 35 abgelegten, für das zweite Kommunikationsnetz 33 spezifischen Identität kann ein Paketdatendienst zwischen dem zweiten Kommunikationsnetz 33 und dem ersten Kommunikationsnetz 31 bereitgestellt werden. Dies kann erfolgen, ohne dass hierfür eine statische Konfiguration oder eine erneute Vertragsaushandlung zwischen dem Netzbetreiber des ersten Kommunikationsnetzes 31 und dem Netzbetreiber des zweiten Kommunikationsnetzes 33 erforderlich ist.

In dem Speichermedium 35 sind darüber hinaus für die Authentifizierung des zweiten Kommunikationsnetzes 33 verwendete Authentifizierungsdaten abgelegt. Erst nach erfolgreicher Authentifizierung und Autorisierung wird zwischen einem VPN Gateway 38 und dem Zugangsknoten 34 mit dem VPN Client eine VPN-Verbindung aufgebaut. Dabei kann der VPN-Gateway 38 als eigener Netzknoten oder als Teil des Kontaktknotens 32 realisiert sein.

Ein Endgerät 37 des zweiten Kommunikationsnetzes 33 kann sich nun beispielsweise über einen Netzknoten 36 in Form eines so genannten WLAN Access Points mittels des Zugangsknotens 34 gegenüber dem als AAA-Server ausgebildeten Kontaktknoten 32 authentifizieren und autorisieren. Nachdem dies geschehen ist, kann zwischen dem Endgerät 37 und einem in Figur 3 nicht dargestellten Packet Data Gateway (PDG) zwecks Bereitstellung eines Paketdatendienstes ein VPN-Tunnel beispielsweise in Form eines IPSec-Tunnels aufgebaut werden. Dabei kann die etablierte VPN-Verbindung zwischen dem ersten Kommunikationsnetz 31 und dem zweiten Kommunikationsnetz 33 genutzt werden, oder aber ein separater, ebenfalls verschlüsselter Paketdatendienst bereitgestellt werden, wodurch das Auftreten verschachtelter Tunnel (d. h. von Tunneln innerhalb von Tunneln) vorteilhafterweise vermieden wird.

Bei den auf dem Speichermedium 35 gespeicherten Authentifizierungsdaten kann es sich beispielsweise um ein so genanntes Shared Secret, d. h. einen gemeinsamen geheimen Wert, der lediglich dem ersten Kommunikationsnetz 31 und dem zweiten Kommunikationsnetz 33 bekannt ist, oder aber um im Rahmen der Authentifizierung und der Verschlüsselung verwendete so genannte Zertifikate handeln. Die Verschlüsselung kann gemäß einem als symmetrisch oder einem als asymmetrisch bezeichneten Verfahren ablaufen, oder aber nach einem Verfahren, das symmetrische und asymmetrische Komponenten aufweist.

Es sei darauf hingewiesen, dass das zweite Kommunikationsnetz 33 gesicherte Verbindungen auch gleichzeitig zu mehreren ersten Kommunikationsnetzen 31 aufbauen kann. Dabei kann es sich beispielsweise um die 3GPP-Mobilfunknetze verschiedener Netzbetreiber handeln.

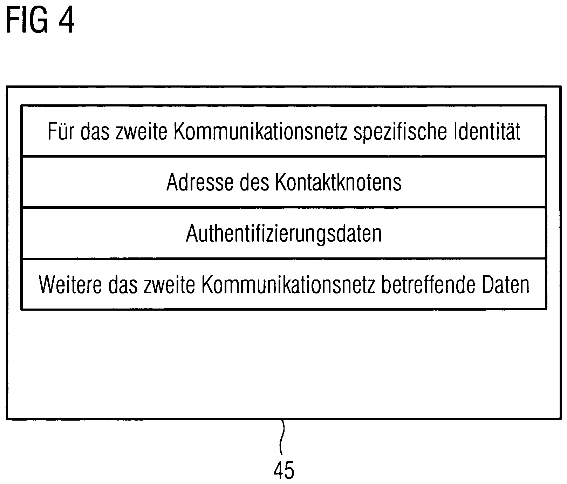

Figur 4 zeigt in einer schematischen Skizze ein Ausführungsbeispiel des erfindungsgemäßen Speichermediums. Gezeigt ist ein Speichermedium 45 in Form einer SIM-Karte. Auf dem Speichermedium 45 sind als Parameter die für das zweite Kommunikationsnetz spezifische Identität, die Adresse des Kontaktknotens und Authentifizierungsdaten sowie weitere das zweite Kommunikationsnetz betreffende Daten gespeichert. Bei den weiteren das zweite Kommunikationsnetz betreffenden Daten kann es sich beispielsweise um den Vertrag zwischen den Netzbetreibern des ersten und des zweiten Kommunikationsnetzes betreffende Daten und/oder um Netzwerkpräferenzen und/oder um eine Liste der dem zweiten Kommunikationsnetz von dem ersten Kommunikationsnetz zur Verfügung gestellten Netzwerkdienste handeln.

## Patentansprüche

1. Verfahren zum Anbinden eines zweiten Kommunikationsnetzes (13; 23; 33) mit einem Zugangsknoten (14; 24; 34) an ein erstes Kommunikationsnetz (11; 21; 31) mit einem Kontaktknoten (12; 22; 32), mit zumindest den folgenden Schritten
- Auslesen oder Empfangen einer für das zweite Kommunikationsnetz (13; 23; 33) spezifischen, in einem Speichermedium (15; 25; 35; 45) eines Speicherknotens (26) des zweiten Kommunikationsnetzes (13; 23; 33) gespeicherten Identität durch den Zugangsknoten (14; 24; 34) **gekennzeichnet, durch** dass
- Senden einer die für das zweite Kommunikationsnetz (13; 23; 33) spezifische Identität enthaltenden Anbindungsnachricht von dem Zugangsknoten (14; 24; 34) an den Kontaktknoten (13; 23; 33), der durch eine in dem Speichermedium (15; 25; 35; 45) abgelegte Adresse festgelegt ist, und
- Bereitstellen eines Paketdatendienstes zu dem Zugangsknoten (14; 24; 34) durch den Kontaktknoten (12; 22; 32) unter Bewirken des Anbindens des zweiten Kommunikationsnetzes (13; 23; 33) an das erste Kommunikationsnetz (11; 21; 31).

2. Verfahren nach Anspruch 1,
**darduch gekennzeichnet,** dass
das zweite Kommunikationsnetz (13; 23; 33) und das erste Kommunikationsnetz (11; 21; 31) sich wechselseitig authentifizieren und
- das erste Kommunikationsnetz (11; 21; 31) eine Autorisierung des zweiten Kommunikationsnetzes (13; 23; 33) vornimmt.

3. Verfahren nach Anspruch 1 oder 2,
**dardurch gekennzeichnet,** dass
in dem Speichermedium (15; 25; 35; 45) für die Authentifizierung des zweiten Kommunikationsnetzes (13; 23; 33) verwendete Authentifizierungsdaten abgelegt sind.

4. Verfahren nach Anspruch 2 oder 3,
**dadurch gekennzeichnet, dass**
der Paketdatendienst nach erfolgreicher Authentifizierung als gesicherte Datenverbindung bereitgestellt wird.

5. Verfahren nach Anspruch 4,
**dadurch gekennzeichnet, dass**
die gesicherte Datenverbindung in Form eines so genannten VPN (Virtual Private Network)-Tunnels aufgebaut wird.

6. Verfahren nach einem der vorhergehenden Ansprüche,
**dadurch gekennzeichnet, dass**
der Paketdatendienst zwischen dem ersten Kommunikationsnetz (11; 21; 31) und dem zweiten Kommunikationsnetz (13; 23; 33) ganz oder teilweise drahtlos bereitgestellt wird.

7. Verfahren nach einem der vorhergehenden Ansprüche,
**dadurch gekennzeichnet, dass**
der Paketdatendienst zwischen dem ersten Kommunikationsnetz (11; 21; 31) und dem zweiten Kommunikationsnetz (13; 23; 33) zur Übertragung von Vergebührungsdaten verwendet wird.

8. Verfahren nach einem der vorhergehenden Ansprüche,
**dadurch gekennzeichnet, dass**
das Anbinden des zweiten Kommunikationsnetzes (13; 23; 33) an das erste Kommunikationsnetz (11; 21; 31) über zumindest ein weiteres Kommunikationsnetz (29; 39) erfolgt.

9. Verfahren nach einem der vorhergehenden Ansprüche,
dardurch gekennzeichnet, dass
in dem zweiten Kommunikationsnetz (13; 23; 33) Endgeräte (16, 17, 18; 27, 28; 37) betrieben werden.

10. Verfahren nach Anspruch 9,
**dadurch gekennzeichnet, dass**
die Endgeräte (16, 17, 18; 27, 28; 37) zur Nutzung von Diensten des ersten Kommunikationsnetzes (11; 21; 31) jeweils einen eigenen Paketdatendienst zu dem ersten Kommunikationsnetz (11; 21; 31) aufbauen.

11. Verfahren nach Anspruch 10,
**dadurch gekennzeichnet, dass**
der Paketdatendienst zwischen den Endgeräten (16, 17, 18; 27, 28; 37) und dem ersten Kommunikationsnetz (11; 21; 31) je weils als gesicherte Datenverbindung bereitgestellt wird.

12. Verfahren nach einem der Ansprüche 9 bis 11,
**dadurch gekennzeichnet, dass**
die Endgeräte (16, 17, 18; 27, 28; 37) zur Nutzung von Diensten des ersten Kommunikationsnetzes (11; 21; 31) den zwischen dem ersten (11; 21; 31) und dem zweiten Kommunikationsnetz (13; 23; 33) aufgebauten Paketdatendienst verwenden.

13. Verfahren nach einem der Ansprüche 9 bis 12,
**dadurch gekennzeichnet, dass**
sich die Endgeräte (16, 17, 18; 27, 28; 37) mittels der in dem Speichermedium (15; 25; 35; 45) gespeicherten Identität des zweiten Mobilfunknetzes (13; 23; 33) gegenüber dem ersten Kommunikationsnetz (11; 21; 31) authentifizieren und/oder autorisieren.

14. Verfahren nach einem der Ansprüche 1 bis 12,
**dadurch gekennzeichnet, dass**
sich die Endgeräte (16, 17, 18; 27, 28; 37) mittels in Speichermitteln der Endgeräte (16, 17, 18; 27, 28; 37) abgelegter Daten gegenüber dem ersten Kommunikationsnetz (11; 21; 31) und/oder dem zweiten Kommunikationsnetz (13; 23; 33) authentifizieren und/oder autorisieren.

15. Verfahren nach einem der vorhergehenden Ansprüche,
**dadurch gekennzeichnet, dass**
der Zugangsknoten (14; 24; 34) seinen aktuellen Aufenthaltsort ermittelt und in der Anbindungsnachricht an den Kontaktknoten (12; 22; 32) des ersten Kommunikationsnetzes sendet (11; 21; 31).

16. Verfahren nach einem der vorhergehenden Ansprüche,
**dadurch gekennzeichnet, dass**
das erste Kommunikationsnetz (11; 21; 31) dem zweiten Kommunikationsnetz (13; 23; 33) Netzwerkdienste zur Verfügung stellt.

17. Verfahren nach einem der vorhergehenden Ansprüche,
**dadurch gekennzeichnet, dass**
als Speichermedium (15; 25; 35; 45) eine durch den Netzbetreiber oder Dienstanbieter des ersten Kommunikationsnetzes (11; 21; 31) ausgegebene Smart-Karte, eine SIM-Karte oder eine Datei verwendet wird.

18. Verfahren nach einem der vorhergehenden Ansprüche,
**dadurch gekennzeichnet, dass**
in dem Speichermedium (15; 25; 35; 45) weitere das zweite Kommunikationsnetz (13; 23; 33) betreffende Daten abgelegt sind.

19. Verfahren nach einem der vorhergehenden Ansprüche,
**dadurch gekennzeichnet, dass**
als Adresse eine Internet Protocol (IP)-Adresse verwendet wird.

20. Verfahren nach einem der vorhergehenden Ansprüche,
**dadurch gekennzeichnet, dass**
der Zugangsknoten (14; 24; 34) als Speicherknoten (11; 21; 31) verwendet wird.

21. Verfahren nach einem der vorhergehenden Ansprüche,
**dadurch gekennzeichnet, dass**
als erstes Kommunikationsnetz (11; 21; 31) ein Mobilfunknetz nach dem 3rd Generation Partnership Project (3GPP)-Standard verwendet wird.

22. Verfahren nach einem der vorhergehenden Ansprüche,
**dadurch gekennzeichnet, dass**
als zweites Kommunikationsnetz (13; 23; 33) ein Wireless Local Area Network (WLAN), ein Wireless Metropolitan Area Network (WMAN) oder ein Kommunikationsnetz nach dem Worldwide Interoperability for Microwave Access-Standard (WiMAX) verwendet wird.

23. Anordnung zum Anbinden eines zweiten Kommunikationsnetzes (13; 23; 33) an ein erstes Kommunikationsnetz (11; 21; 31), wobei das zweite Kommunikationsnetz (11; 21; 31) umfasst:
- einen Speicherknoten (26) mit einem Speichermedium (15; 25; 35; 45), in dem eine für das zweite Kommunikationsnetz (13; 23; 33) spezifische Identität und eine den Kontaktknoten (12; 22; 32) des ersten Kommunikationsnetzes (11; 21; 31) identifizierende Adresse abgelegt sind, **gekennzeichnet durch**
- einen Zugangsknoten (14; 24; 34) zum Auslesen oder Empfangen der für das zweite Kommunikationsnetz (13; 23; 33) spezifischen Identität aus dem Speichermedium (15; 25; 35; 45) des Speicherknotens (26) und zum Senden einer die für das zweite Kommunikationsnetz (13; 23; 33) spezifische Identität enthaltenden Anbindungsnachricht an den durch die in dem Speichermedium (15; 25; 35; 45) abgelegte Adresse vorbestimmten Kontaktknoten (12; 22; 32) des ersten Kommunikationsnetzes (11; 21; 31), und wobei
- der Kontaktknoten (12; 22; 32) zum Aufbauen eines Paketdatendienstes zu dem Zugangsknoten (14; 24; 34) unter Bewirken des Anbindens des zweiten Kommunikationsnetzes (13; 23; 33) an das erste Kommunikationsnetz (11; 21; 31) ausgebildet ist.

24. Anordnung nach Anspruch 23,
**dadurch gekennzeichnet, dass**
in dem Speichermedium (15; 25; 35; 45) für die Authentifizierung des zweiten Kommunikationsnetzes (13; 23; 33) verwendete Authentifizierungsdaten abgelegt sind.

25. Anordnung nach einem der Ansprüche 23 oder 24,
**dadurch gekennzeichnet, dass**
das zweite Kommunikationsnetz (13; 23; 33) über zumindest ein weiteres Kommunikationsnetz (29; 39) an das erste Kommunikationsnetz (11; 21; 31) angebunden ist.

26. Anordnung nach einem der Ansprüche 23 bis 25,
**dadurch gekennzeichnet, dass**
an das zweite Kommunikationsnetz (13; 23; 33) Endgeräte (16, 17, 18; 27, 28; 37) angeschlossen sind.

27. Anordnung nach Anspruch 26,
**dadurch gekennzeichnet, dass**
die Endgeräte (16, 17, 18; 27, 28; 37) Speichermittel aufweisen, in denen Daten zur Authentifizierung und/oder zur Autorisierung des jeweiligen Endgerätes durch das erste (11; 21; 31) und/oder das zweite Kommunikationsnetz (13; 23; 33) abgelegt sind.

28. Anordnung nach einem der Ansprüche 23 bis 27,
**dadurch gekennzeichnet, dass**
das Speichermedium (15; 25; 35; 45) eine durch den Netzbetreiber oder Dienstanbieter des ersten Kommunikationsnetzes (11; 21; 31) ausgegebene Smart-Karte, eine SIM-Karte oder eine Datei ist.

29. Anordnung nach einem der Ansprüche 23 bis 28,
**dadurch gekennzeichnet, dass**
in dem Speichermedium (15; 25; 35; 45) weitere das zweite Kommunikationsnetz (13; 23; 33) betreffende Daten abgelegt sind.

30. Anordnung nach einem der Ansprüche 23 bis 29,
**dadurch gekennzeichnet, dass**
der Zugangsknoten (14; 24; 34) der Speicherknoten (26) ist.

31. Anordnung nach einem der Ansprüche 23 bis 30,
**dadurch gekennzeichnet, dass**
das erste Kommunikationsnetz (11; 21; 31) ein Mobilfunknetz nach dem 3rd Generation Partnership Project (3GPP)-Standard ist.

32. Anordnung nach einem der Ansprüche 23 bis 31,
**dadurch gekennzeichnet, dass**
das zweite Kommunikationsnetz (13; 23; 33) ein Wireless Local Area Network (WLAN), ein Wireless Metropolitan Area Network (WMAN) oder ein Kommunikationsnetz nach dem Worldwide Interoperability for Microwave Access-Standard (WiMAX) ist.

## Claims

1. Method for interfacing a second communication network (13; 23; 33) comprising an access node (14; 24; 34) with a first communication network (11; 21; 31) comprising a contact node (12; 22; 32), having at least the following steps:
- reading out or receiving an identity specific to the second communication network (13; 23; 33), stored in a storage medium (15; 25; 35; 45) of a memory node (26) of the second communication network (13; 23; 33) by the access node (14; 24; 34), **characterized by**
- sending an interfacing message containing the identity specific to the second communication network (13; 23; 33) from the access node (14; 24; 34) to the contact node (13; 23; 33) which is specified by an address stored in the storage medium (15; 25; 35; 45), and
- providing a packet data service to the access node (14; 24; 34) via the contact node (12; 22; 32), effecting the interfacing of the second communication network (13; 23; 33) with the first communication network (11; 21; 31).

2. Method according to Claim 1, **characterized in that** the second communication network (13; 23; 33) and the first communication network (11; 21; 31) mutually authenticate themselves and
- the first communication network (11; 21; 31) carries out an authorization of the second communication network (13; 23; 33).

3. Method according to Claim 1 or 2, **characterized in that** authentication data used for the authentication of the second communication network (13; 23; 33) are stored in the storage medium (15; 25; 35; 45).

4. Method according to Claim 2 or 3, **characterized in that** the packet data service is provided as a secure data connection after successful authentication.

5. Method according to Claim 4, **characterized in that** the secure data connection is set up in the form of a so-called VPN (Virtual Private Network) tunnel.

6. Method according to one of the preceding claims, **characterized in that** the packet data service is provided wholly or partially wirelessly between the first communication network (11; 21; 31) and the second communication network (13; 23; 33).

7. Method according to one of the preceding claims, **characterized in that** the packet data service is used for the transmission of charging data between the first communication network (11; 21; 31) and the second communication network (13; 23; 33).

8. Method according to one of the preceding claims, **characterized in that** the second communication network (13; 23; 33) is interfaced with the first communication network (11; 21; 31) via at least one further communication network (29; 39).

9. Method according to one of the preceding claims, **characterized in that** terminals (16, 17, 18; 27, 28; 37) are operated in the second communication network (13; 23; 33) .

10. Method according to Claim 9, **characterized in that** the terminals (16, 17, 18; 27, 28; 37) in each case set up their own packet data service to the first communication network (11; 21; 31) for utilizing services of the first communication network (11; 21; 31).

11. Method according to Claim 10, **characterized in that** the packet data service between the terminals (16, 17, 18; 27, 28; 37) and the first communication network (11; 21; 31) is in each case provided as a secure data connection.

12. Method according to one of Claims 9 to 11, **characterized in that** the terminals (16, 17, 18; 27, 28; 37) use the packet data service set up between the first communication network (11; 21; 31) and the second communication network (13; 23; 33) for utilizing services of the first communication network (11; 21; 31).

13. Method according to one of Claims 9 to 12, **characterized in that** the terminals (16, 17, 18; 27, 28; 37) authenticate and/or authorize themselves with respect to the first communication network (11; 21; 31) by means of the identity of the second mobile radio network (13; 23; 33) stored in the storage medium (15; 25; 35; 45).

14. Method according to one of Claims 1 to 12, **characterized in that** the terminals (16, 17, 18; 27, 28; 37) authenticate and/or authorize themselves with respect to the first communication network (11; 21; 31) and/or the second communication network (13; 23; 33) by means of data stored in storage means of the terminals (16, 17, 18; 27, 28; 37).

15. Method according to one of the preceding claims, **characterized in that** the access node (14; 24; 34) determines its current location and sends it (11; 21; 31) to the contact node (12; 22; 32) of the first communication network in the interfacing message.

16. Method according to one of the preceding claims, **characterized in that** the first communication network (11; 21; 31) provides network services for the second communication network (13; 23; 33).

17. Method according to one of the preceding claims, **characterized in that** a smart card issued by the network operator or service provider of the first communication network (11; 21; 31), a SIM card or a file is used as storage medium (15; 25; 35; 45).

18. Method according to one of the preceding claims, **characterized in that** further data relating to the second communication network (13; 23; 33) are stored in the storage medium (15; 25; 35; 45).

19. Method according to one of the preceding claims, **characterized in that** an Internet protocol (IP) address is used as the address.

20. Method according to one of the preceding claims, **characterized in that** the access node (14; 24; 34) is used as memory node (11; 21; 31).

21. Method according to one of the preceding claims, **characterized in that** a mobile radio network according to the 3rd Generation Partnership Project (3GPP) standard is used as the first communication network (11; 21; 31).

22. Method according to one of the preceding claims, **characterized in that** a wireless local area network (WLAN), a wireless metropolitan area network (WMAN) or a communication network according to the Worldwide Interoperability for Microwave Access standard (WiMAX) is used as the second communication network (13; 23; 33).

23. Arrangement for interfacing a second communication network (13; 23; 33) with a first communication network (11; 21; 31), wherein the second communication network (11; 21; 31) comprises:
- a memory node (26) comprising a storage medium (15; 25; 35; 45) in which an identity specific to the second communication network (13; 23; 33) and an address identifying the contact node (12; 22; 32) of the first communication network (11; 21; 31) are stored, **characterized by**
- an access node (14; 24; 34) for reading out or receiving the identity specific to the second communication network (13; 23; 33) from the storage medium (15; 25; 35; 45) of the memory node (26) and for sending an interfacing message containing the identity specific to the second communication network (13; 23; 33) to the contact node (12; 22; 32), predetermined by the address stored in the storage medium (15; 25; 35; 45), of the first communication network (11; 21; 31), and wherein
- the contact node (12; 22; 32) is arranged for setting up a packet data service to the access node (14; 24; 34), effecting the interfacing of the second communication network (13; 23; 33) with the first communication network (11; 21; 31).

24. Arrangement according to Claim 23, **characterized in that** authentication data used for the authentication of the second communication network (13; 23; 33) are stored in the storage medium (15; 25; 35; 45).

25. Arrangement according to one of Claims 23 or 24, **characterized in that** the second communication network (13; 23; 33) is interfaced with the first communication network (11; 21; 31) via at least one further communication network (29; 39).

26. Arrangement according to one of Claims 23 to 25, **characterized in that** terminals (16, 17, 18; 27, 28; 37) are connected to the second communication network (13; 23; 33) .

27. Arrangement according to Claim 26, **characterized in that** the terminals (16, 17, 18; 27, 28; 37) have storage means in which data for authentication and/or authorization of the respective terminal by the first (11; 21; 31) and/or the second communication network (13; 23; 33) are stored.

28. Arrangement according to one of Claims 23 to 27, **characterized in that** the storage medium (15; 25; 35; 45) is a smart card issued by the network operator or service provider of the first communication network (11; 21; 31), a SIM card or a file.

29. Arrangement according to one of Claims 23 to 28, **characterized in that** further data relating to the second communication network (13; 23; 33) are stored in the storage medium (15; 25; 35; 45).

30. Arrangement according to one of Claims 23 to 29, **characterized in that** the access node (14; 24; 34) is the memory node (26).

31. Arrangement according to one of Claims 23 to 30, **characterized in that** the first communication network (11; 21; 31) is a mobile radio network according to the 3rd Generation Partnership Project (3GPP) standard.

32. Arrangement according to one of Claims 23 to 31, **characterized in that** the second communication network (13; 23; 33) is a wireless local area network (WLAN), a wireless metropolitan area network (WMAN) or a communication network according to the Worldwide Interoperability for Microwave Access standard (or WiMAX).

## Revendications

1. Procédé de connexion d'un deuxième réseau de communication (13 ; 23 ; 33) avec un noeud d'accès (14 ; 24 ; 34) à un premier réseau de communication (11 ; 21 ; 31) avec un noeud de contact (12 ; 22 ; 32), avec au moins les étapes suivantes :
- extraction ou réception d'une identité spécifique au deuxième réseau de communication (13 ; 23 ; 33), stockée dans un support de mémoire (15 ; 25 ; 35 ; 45) d'un noeud de mémoire (26) du deuxième réseau de communication (13 ; 23 ; 33) par le réseau d'accès (14 ; 24 ; 34), **caractérisé par**
- l'envoi d'un message de connexion contenant l'identité spécifique au deuxième réseau de communication (13 ; 23 ; 33), du noeud d'accès (14 ; 24 ; 34) sur le noeud de contact (13 ; 23 ; 33), fixé par une adresse déposée dans le support de mémoire (15 ; 25 ; 35 ; 45), et
- fourniture d'un service de données en paquets au noeud d'accès (14 ; 24 ; 34) par le noeud de contact (12 ; 22 ; 32) avec pour effet la connexion du deuxième réseau de communication (13 ; 23 ; 33) au premier réseau de communication (11 ; 21 ; 31).

2. Procédé selon la revendication 1,
**caractérisé en ce que** le deuxième réseau de communication (13 ; 23 ; 33) et le premier réseau de communication (11 ; 21 ; 31) s'authentifient mutuellement et
le premier réseau de communication (11 ; 21 ; 31) se charge de l'autorisation du deuxième réseau de communication (13 ; 23 ; 33).

3. Procédé selon la revendication 1 ou 2,
**caractérisé en ce que** dans le support de mémoire (15 ; 25 ; 35 ; 45) pour l'authentification du deuxième réseau de communication (13 ; 23 ; 33), des données d'authentification utilisées sont déposées.

4. Procédé selon la revendication 2 ou 3,
**caractérisé en ce que** le service de données en paquets est fourni après authentification réussie comme connexion de données sécurisée.

5. Procédé selon la revendication 4,
**caractérisé en ce que** la connexion sécurisée de données est construite sous la forme d'un tunnel dit VPN (Virtual Private Network).

6. Procédé selon l'une des revendications précédentes,
**caractérisé en ce que** le service de données en paquets est fourni intégralement ou partiellement sans fil entre le premier réseau de communication (11 ; 21 ; 31) et le deuxième réseau de communication (13 ; 23 ; 33).

7. Procédé selon l'une des revendications précédentes,
**caractérisé en ce que** le service de données en paquets est utilisé pour la transmission de données surtaxées entre le premier réseau de communication (11 ; 21 ; 31) et le deuxième réseau de communication (13 ; 23 ; 33).

8. Procédé selon l'une des revendications précédentes,
**caractérisé en ce que** la connexion du deuxième réseau de communication (13 ; 23 ; 33) au premier réseau de communication (11 ; 21 ; 31) se fait par au moins un autre réseau de communication (29 ; 39).

9. Procédé selon l'une des revendications précédentes,
**caractérisé en ce que** le deuxième réseau de communication (13 ; 23 ; 33) exploite des terminaux (16, 17, 18 ; 27, 28 ; 37).

10. Procédé selon la revendication 9,
**caractérisé en ce que** les terminaux (16, 17, 18; 27, 28 ; 37), pour l'utilisation de services du premier réseau de communication (11 ; 21 ; 31) constituent respectivement un service propre de données en paquets au premier réseau de communication (11 ; 21 ; 31).

11. Procédé selon la revendication 10,
**caractérisé en ce que** le service de données en paquets est fourni entre les terminaux (16, 17, 18 ; 27, 28 ; 37) et le premier réseau de communication (11 ; 21 ; 31) respectivement sous forme de connexion de données sécurisée.

12. Procédé selon l'une des revendications 9 à 11,
**caractérisé en ce que** les terminaux (16, 17, 18 ; 27, 28 ; 37), pour l'utilisation de services du premier réseau de communication (11 ; 21 ; 31) utilisent le service de données en paquets constitué entre le premier (11 ; 21 ; 31) et le deuxième réseau de communication (13 ; 23 ; 33).

13. Procédé selon l'une des revendications 9 à 12,
**caractérisé en ce que** les terminaux (16, 17, 18; 27, 28 ; 37) authentifient et/ou autorisent vis-à-vis du premier réseau de communication au moyen de l'identité, mémorisée dans le support de mémoire (15 ; 25 ; 35 ; 45), du deuxième réseau de téléphonie mobile (13 ; 23 ; 33).

14. Procédé selon l'une des revendications 1 à 12,
**caractérisé en ce que** les terminaux (16, 17, 18 ; 27, 28 ; 37) authentifient et/ou autorisent vis-à-vis du premier réseau de communication (11 ; 21 ; 31) et/ou du deuxième réseau de communication (13 ; 23 ; 33) au moyen des données déposées dans les moyens de mémoire des terminaux (16, 17, 18 ; 27, 28 ; 37).

15. Procédé selon l'une des revendications précédentes,
**caractérisé en ce que** le noeud d'accès (14; 24 ; 34) détecte sa localisation actuelle et l'envoie dans le message de connexion au noeud de contact (12 ; 22 ; 32) du premier réseau de communication (11 ; 21 ; 31).

16. Procédé selon l'une des revendications précédentes,
**caractérisé en ce que** le premier réseau de communication (11 ; 21 ; 31) met à disposition du deuxième réseau de communication (13 ; 23 ; 33) des services de réseau.

17. Procédé selon l'une des revendications précédentes,
**caractérisé en ce qu'**on utilise comme support de mémoire (15 ; 25 ; 35 ; 45) une carte Smart, une carte SIM ou un fichier fourni par l'exploiteur de réseau ou le fournisseur de services du premier réseau de communication (11 ; 21 ; 31).

18. Procédé selon l'une des revendications précédentes,
**caractérisé en ce que**, dans le support de mémoire (15 ; 25 ; 35 ; 45) sont déposées d'autres données relatives au deuxième réseau de communication (13 ; 23 ; 33).

19. Procédé selon l'une des revendications précédentes,
**caractérisé en ce qu'**on utilise comme adresse une adresse IP (Internet Protocol).

20. Procédé selon l'une des revendications précédentes,
**caractérisé en ce que** le noeud d'accès (14 ; 24 ; 34) est utilisé comme noeud de mémoire (11 ; 21 ; 31).

21. Procédé selon l'une des revendications précédentes,
**caractérisé en ce qu'**on utilise comme premier réseau de communication (11 ; 21 ; 31) un réseau de téléphonie mobile selon la norme de troisième génération 3rd Generation Partnership Project (3GPP).

22. Procédé selon l'une des revendications précédentes,
**caractérisé en ce qu'**on utilise comme deuxième réseau de communication (13; 23; 33) un réseau WLAN (Wireless Local Area Network), un réseau sans fil WMAN (Wireless Métropolitain Area Network) ou un réseau de communication selon la norme Worldwide Interoperability for Microwave Access (WiMAX).

23. Montage de connexion d'un deuxième réseau de communication (13; 23; 33) à un premier réseau de communication (11; 21; 31), le deuxième réseau de communication (11; 21; 31) comprenant:
- un noeud de mémoire (26) avec un support de mémoire (15; 25; 35; 45), dans lequel une identité spécifique au deuxième réseau de communication (13; 23; 33) et une adresse d'identification du noeud de contact (12; 22; 32) du premier réseau de communication (11; 21; 31) sont déposées, **caractérisé par**
- un noeud d'accès (14; 24; 34) pour l'extraction ou la réception de l'identité spécifique au deuxième réseau de communication (13; 23; 33) du support de mémoire (15; 25; 35; 45) du noeud de mémoire (26) et pour l'envoi d'un message de connexion contenant l'identité spécifique au deuxième réseau de communication (13; 23; 33) au noeud de contact (12; 22; 32), prédéterminé par l'adresse déposée dans le support de mémoire (15; 25; 35; 45), du premier réseau de communication (11; 21; 31), et
- le noeud de contact (12; 22; 32) étant conçu pour la constitution d'un service de données en paquets destiné au noeud d'accès (14; 24; 34) avec pour effet la connexion du deuxième réseau de communication (13; 23; 33) au premier réseau de communication (11; 21; 31).

24. Montage selon la revendication 23,
**caractérisé en ce que** des données d'authentification utilisées pour l'authentification du deuxième réseau de communication (13; 23; 33) sont déposées dans le support de mémoire (15; 25; 35; 45) .

25. Montage selon l'une des revendications 23 ou 24,
**caractérisé en ce que** le deuxième réseau de communication (13; 23; 33) est connecté au premier réseau de communication (11; 21; 31) par au moins un autre réseau de communication (29; 39).

26. Montage selon l'une des revendications 23 à 25,
**caractérisé en ce que** des terminaux (16, 17, 18; 27, 28; 37) sont branchés au deuxième réseau de communication (13; 23; 33).

27. Montage selon la revendication 26,
**caractérisé en ce que** les terminaux (16, 17, 18; 27, 28; 37) possèdent des moyens de mémoire dans lesquels les données d'authentification et/ou d'autorisation du terminal respectif sont déposées par le premier (11; 21; 31) et/ou le deuxième réseau de communication (13; 23; 33).

28. Montage selon l'une des revendications 23 à 27,
**caractérisé en ce que** le support de mémoire (15; 25; 35; 45) est une carte Smart, une carte SIM ou un fichier fourni par l'exploiteur de réseau ou le fournisseur de services du premier réseau de communication (11; 21; 31).

29. Montage selon l'une des revendications 23 à 28,
**caractérisé en ce que**, dans le support de mémoire (15; 25; 35; 45) sont déposées d'autres données relatives au deuxième réseau de communication (13; 23; 33).

30. Montage selon l'une des revendications 23 à 29,
**caractérisé en ce que** le noeud d'accès (14; 24; 34) est le noeud de mémoire (26).

31. Montage selon l'une des revendications 23 à 30,
**caractérisé en ce que** le premier réseau de communication (11; 21; 31) est un réseau de téléphonie mobile selon la norme de troisième génération 3rd Generation Partnership Project (3GPP).

32. Montage selon l'une des revendications 23 à 31,
**caractérisé en ce que** le deuxième réseau de communication (13; 23; 33) est un réseau WLAN (Wireless Local Area Network), un réseau sans fil WMAN (Wireless Métropolitain Area Network) ou un réseau de communication selon la norme Worldwide Interoperability for Microwave Access (WiMAX).
